# EUROPÄISCHE PATENTSCHRIFT

(11) **EP 0 975 494 B1**
(45) Veröffentlichungstag und Bekanntmachung des Hinweises auf die Patenterteilung: **04.01.2006**
(21) Anmeldenummer: 98924023.9
(22) Anmeldetag: 19.03.1998
(51) Int. Cl.: B60S 1/08

(54) **VORRICHTUNG UND VERFAHREN ZUM BETREIBEN EINES SCHEIBENWISCHERS**
DEVICE AND METHOD FOR OPERATING A WINDSCREEN WIPER
DISPOSITIF ET PROCEDE POUR FAIRE FONCTIONNER UN ESSUIE-GLACE

(30) Priorität: 04.04.1997 DE 19713835
(43) Veröffentlichungstag der Anmeldung: 02.02.2000
(73) Patentinhaber: ROBERT BOSCH GMBH, 70442 Stuttgart (DE)
(72) Erfinder: MICHENFELDER, Gebhard, D-77839 Lichtenau (DE); BUEHREN, Harald, D-31139 Hildesheim (DE); BLITZKE, Henry, D-77815 Bühl (DE); KROENINGER, Mario, D-77815 Bühl-Neusatz (DE)
(86) Internationale Anmeldenummer: PCT/DE1998/000804
(87) Internationale Veröffentlichungsnummer: WO 1998/045148

(56) Entgegenhaltungen:
- DE-A- 4 417 436
- DE-A- 19 519 502
- DE-C- 19 519 566
- US-A- 5 453 670

## Beschreibung

### Stand der Technik

Die Erfindung geht aus von einer Vorrichtung und einem Verfahren zum Betreiben eines Scheibenwischers nach dem Oberbegriff des Anspruchs 1 beziehungsweise 8, wie sie aus der DE 44 17 436 A1 bekannt sind.

Es ist bereits eine Vorrichtung (DE 41 41 348 A1) zur Steuerung einer Scheibenwischanlage bekannt, die die Wischzyklushäufigkeit automatisch auf sich qualitativ und/oder quantitativ ändernde Zustände des auf der Scheibe vorhandenen Belages abstimmt. Dazu werden die Signale eines optischen Regensensors durch eine Schaltanordnung ausgewertet. Ein Wischzyklus wird eingeleitet, wenn die Signale eine bestimmte Schaltschwelle unterschreiten. Mit jedem Überwischvorgang des Regensensors steigt das Signal bis zu einem maximalen Signalwert wieder an, der dann für den nachfolgenden Wischzyklus als Referenzwert gespeichert wird. Die Schaltschwelle wird in Abhängigkeit von diesem Referenzwert auf 95% festgelegt.

Bei dieser Steuereinrichtung wird jedoch nach einem festgelegten Zeitraum ein neuer Wischzyklus ausgelöst, wenn es innerhalb dieses Zeitraumes nicht zu einer ausreichenden Bildung eines Belages kommt und der Signalwert der Sensorvorrichtung die Schaltschwelle nicht unterschreitet. Damit wird ein neuer Referenzwert gebildet, weil dieser zwischenzeitlich ggf. wegen der Temperaturdrift des Sensorsignales nicht mehr zu verwenden ist. Das bedeutet jedoch, daß der Wischer über eine trockene oder nahezu trockene Scheibe wischt.

Weiter können durch Nebel oder Nieselregen erzeugte Signale nicht von der Signaländerung durch Temperaturerhöhung des Sensors unterschieden werden: Beide Effekte führen zum Unterschreiten der Schaltschwelle durch den Signalwert.

Weiterhin wird der Referenzwert bei jedem Wischvorgang neu eingelesen und zur Bestimmung der Schaltschwelle des nachfolgenden Wischzyklusses verwendet. So führt z.B. eine feste Verschmutzung auf der Scheibe zu einem niedrigeren Referenzwert und damit zu einer niedrigeren Schaltschwelle, so daß der Wischvorgang erst bei einem größeren Gesamtbelag aus Verschmutzung und Feuchtigkeit auf der Scheibe ausgelöst wird. Der größere Belag behindert die Sicht des Fahrers und stellt ein Sicherheitsrisiko dar.

### Vorteile der Erfindung

Die erfindungsgemäße Vorrichtung Beziehungsweise das erfindungsgemäße Verfahren mit den kennzeichnenden Merkmalen des Anspruchs 1 beziehungsweise 8 hat den Vorteil, daß zusätzlich zur Regen- und Tropfenerkennung Nebel und Nieselregen durch die Vorrichtung erkannt wird. Die Feuchtigkeit auf der Scheibe wird erkannt und ein dem Niederschlag entsprechender Wischbetrieb ausgelöst.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist die Zuordnung des maximalen Meßwerts zu einem vorgegebenen Grenzwert bei Inbetriebnahme der Wischer. Anschließend erfolgt lediglich bei steigenden Maximalwerten, z.B. bedingt durch eine besser gereinigte Scheibe, die Korrektur der Zuordnung.

Der Vorteil einer Mittelwertbildung aus den Meßwerten liegt in dem ruhigeren Ansprechen der Vorrichtung, da nicht einzelne Meßwerte zu einem Auslösen der Wischertätigkeit führen, sondern die über einen kurzen Zeitraum oder einer vorgegebenen Anzahl gemittelten Meßwerte.

Ein weiterer Vorteil liegt in der Signalauswertung, die durch die erfindungsgemäße Vorrichtung unabhängig von der Signalverstärkung in der Steuereinheit oder deren Erhöhung ist.

Vorteilhaft ist neben einer programmgesteuerten Kompensation der Temperaturdrift der Feuchtigkeitssensorsignale die Messung der Temperatur und deren Berücksichtigung bei der Signalauswertung.

### Zeichnung

Ausführungsbeispiele der Erfindung sind in der Zeichnung dargestellt und in der nachfolgenden Beschreibung näher erläutert. Es zeigen
Figur 1 eine Vorrichtung zum Betreiben eines Scheibenwischers als Blockschaltbild dargestellt,
Figur 2 ein Diagramm der beispielhaften Meßwerte eines Feuchtigkeitssensors aufgetragen über die Zeit,
Figur 3 eine Tabelle zur Berechnung von Differenz und Summe aus den Meßwerten und
Figur 4 ein Diagramm der Werte der Summe aufgetragen über die Meßwerte des Feuchtigkeitssensors.

### Beschreibung der Ausführungsbeispiele

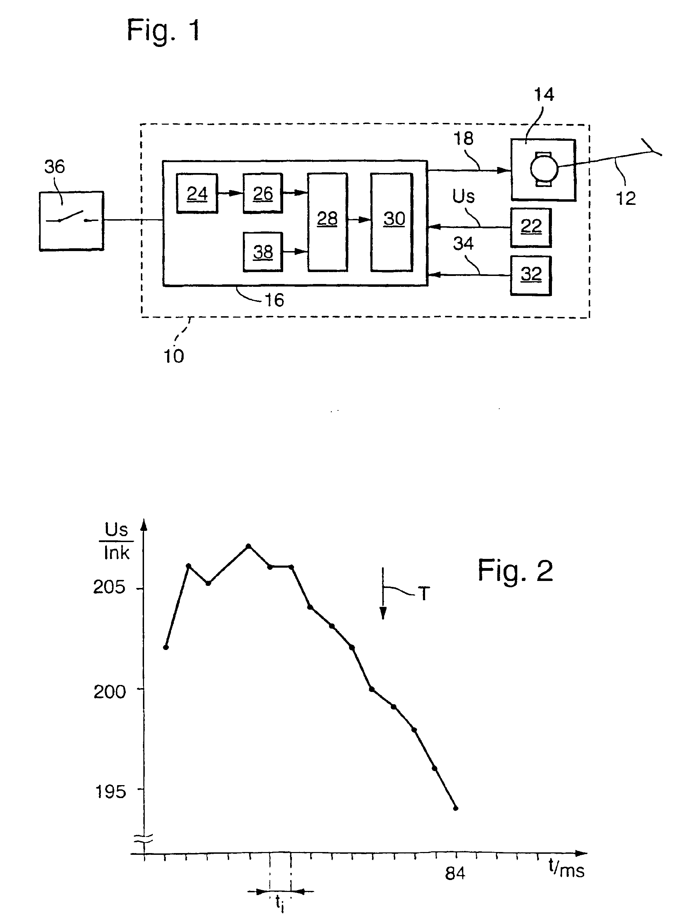

Figur 1 zeigt eine Vorrichtung 10 zum Betreiben eines Scheibenwischers 12 für eine nicht dargestellte Scheibe eines Kraftfahrzeugs, der von einem Motor 14 angetrieben wird. Eine Steuereinheit 16 steuert den Motor 14 über Steuersignale 18 an. Die Steuereinheit 16 erhält Meßwerte Us, beispielsweise von einem optischen Feuchtigkeitssensor 22, der nach dem Prinzip der Totalreflexion in der Scheibe, d.h. der Auskopplung von Lichtstrahlen aus der Scheibe durch auf deren Oberfläche befindliche Wassertropfen, funktioniert. Zu der Auswertung der Meßwerte Us weist die Steuereinheit 16 einen Inkrementalwertgeber 24, ein Differenzwertbildner 26, einen Speicher 28 und eine Auswertestufe 30 auf. Zum Ein- und Ausschalten der Steuereinheit 16 und damit des Wischbetriebs ist ein Bedienelement 36 vorgesehen.

In einer erweiterten Gestaltung des Ausführungsbeispiels liefert ein Temperaturfühler 32 Eingangssignale 34 an die Steuereinheit 16. Diese werden durch eine Programmsteuerung 38 ausgewertet und zur Korrektur der vom Sensor 22 kommenden Meßwerte Us in den Speicher 28 geschrieben.

Figur 2 zeigt einen konstruierten, beispielhaften Verlauf eines Feuchtigkeitssensorsignales, das anfangs einer trocknenden Scheibe entspricht und im weiteren Verlauf durch zunehmende Feuchtigkeit auf der Scheibe wieder abnimmt. Die Meßwerte Us des Signals sind der jeweiligen verstärkten Signalgröße entsprechend in Inkrementalwerten Ink über die Zeit t aufgetragen. Die Meßwerte Us des Feuchtigkeitssensors 22 werden mit einer Intervallzeit ti von beispielsweise 6 Millisekunden von der Steuereinheit 16 aufgenommen und ausgewertet. Je höher der Reflexionsgrad am Feuchtigkeitssensor 22, desto reiner ist die Kfz-Scheibe und desto größer ist der Meßwert Us. Der Pfeil T kennzeichnet die Signalabschwächung der Meßwerte Us bei Erhöhung der Temperatur des Feuchtigkeitssensors.

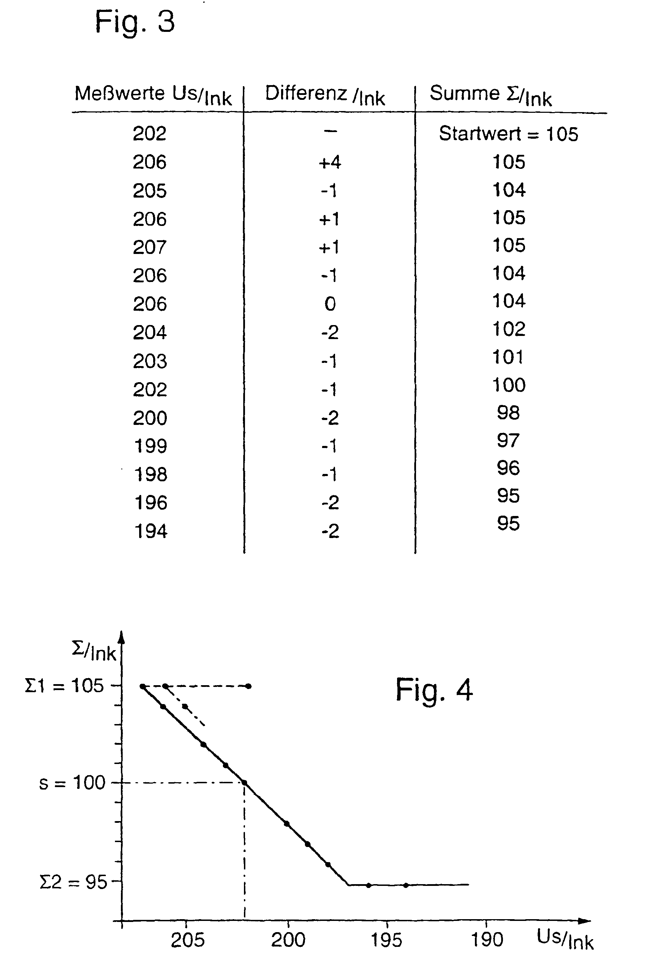

Figur 3 zeigt eine Tabelle zur Berechnung von Differenzen aus den Meßwerten Us und einer daraus resultierenden Summe Σ im Speicher 28 am Beispiel der Meßwerte Us aus Figur 2. Alle eingetragen Werte sind in Inkrementen Ink angegeben. Die Summe Σ beginnt dabei mit dem Startwert 105.

Figur 4 zeigt die mit dem Startwert beginnende und aus den Differenzen der Meßwerte Us gebildete Summe Σ in Abhängigkeit der Meßwerte Us des Feuchtigkeitssensors 22 angegeben in Inkrementalwerten Ink. Die Werte der Summe Σ werden auf einen beliebigen Bereich eingeschränkt, der kleiner als der Bereich der Meßwerte Us ist, und zwar durch einen ersten Grenzwert Σ1, der hier dem Startwert 105 Ink entspricht, und einen zweiten Grenzwert Σ2, der hier bei 95 Ink liegt. Etwa in der Mitte dieses Bereiches liegt eine durch die Steuereinheit 16 beliebig vorgebbare Schwelle S, hier bei 100 Ink.

Dem höchsten erzielten Meßwert Us = 207 Ink für eine saubere Scheibe ohne Feuchtigkeitsbelag wird der erste Grenzwert Σ1 = 105 Ink zugeordnet. Der Verlauf der Kurve ist linear bis zum Erreichen des zweiten Grenzwerts Σ2 = 95 Ink. Fällt der Meßwert Us unter den zweiten Grenzwert Σ2, so wird der Wert der Summe Σ von der Steuereinheit 16 konstant gehalten. Die dargestellte Kurve aus Figur 4 gilt für abnehmende und zunehmende Meßwerte Us des Feuchtigkeitssensors 22.

Die Wirkungsweise der erfindungsgemäßen Vorrichtung wird nun anhand der Figuren 2, 3 und 4 beschrieben.

Der Fahrer eines Kraftfahrzeugs kann durch Betätigung des Bedienelements 36 die Scheibenwischvorrichtung ein- und ausschalten. Bei einsetzendem Regen wird er die Vorrichtung einschalten, so daß die Steuereinheit 16 ein erstes Steuersignal 18 zur Aktivierung des Wischers 12 an den Wischermotor 14 leitet und der Wischer 12 für mindestens einen ersten Wischzyklus wischt. Währenddessen, jedoch spätestens nach dem letztmaligen kurzzeitigen Überwischen des Feuchtigkeitssensors 22 durch den Wischer 12 erhält die Steuereinheit 16 Meßwerte Us des Feuchtigkeitssensors 22, hier für einen stark verkürzten (konstruierten) Zeitraum von t = 84 ms dargestellt. Diese werden von der Steuereinheit 16 folgendermaßen ausgewertet:

Wie in Figur 2 ersichtlich, ordnet der Inkrementalwertgeber 24 den Meßwerten Us nach jeder Intervallzeit ti diskrete Inkrementalwerte Ink zu. Als Inkrementalwertgeber 24 kann beispielsweise ein Timer verwendet werden. Die Meßwerte Us bzw. Inkrementalwerte Ink werden, nach vorheriger Kehrwertbildung und Multiplikation mit einem Faktor zur Erlangung von Werten größer als Eins, dem Differenzwertbildner 26 zugeführt. Dort wird der aktuelle Meßwert Us bzw. Inkrementalwert Ink von dem vorherigen Meßwert Us bzw. Inkrementalwert Ink subtrahiert und die Differenz vorzeichenbehaftet in den Speicher 28 geschrieben. In dem Speicher 28, vorzugsweise ein RAM-Speicher, werden die Differenzen aufaddiert und ergeben eine Summe Σ.

Wie aus Figur 3 beispielhaft ersichtlich wird bei Inbetriebnahme der Vorrichtung 10 durch den Fahrer der erste Grenzwert Σ1 als Startwert (hier 105 Ink) für die Summe Σ in den Speicher 28 geschrieben. Nach dem ersten Wischzyklus des Wischers 12 verbessert sich der Zustand der Scheibe und die Meßwerte Us des Feuchtigkeitssensors 22 nehmen schnell zu. Aufgrund der abdampfenden Schlieren auf der Scheibe dauert der Anstieg der Meßwerte Us länger an als der Überwischvorgang der aktiven Sensorfläche. Die gebildeten positiven Differenzen werden nicht auf den Startwert im Speicher 28 aufaddiert und ordnen daher den ersten Grenzwert Σ1 dem durch diesen Wischzyklus hervorgerufenen saubersten Zustand der Scheibe zu (hier Us = 207 Ink). Gleichzeitig werden auch die Schwelle S und der zweite Grenzwert Σ2, sowie jeder andere Wert der Summe Σ, den Meßwerten Us neu zugeordnet, d.h. der gesamte Bereich der Summe Σ verschiebt sich mit der Zuordnung des ersten Grenzwerts Σ1 - wie in Figur 4 durch Punkte angedeutet nach links - zu dem maximalen Meßwert Us.

Als Startwert kann auch jeder andere zwischen den Grenzwerten Σ1, Σ2 liegende Wert der Summe Σ verwendet werden, hier die Werte zwischen 95 Ink und 105 Ink einschließlich. In diesem Fall werden die gebildeten positiven Differenzen solange auf die Summe Σ addiert, bis der erste Grenzwert Σ1 erreicht ist. Zu berücksichtigen ist, daß Startwerte unterhalb der Schwelle S zu einer direkten Auslösung der Wischertätigkeit nach Aktivierung der Vorrichtung 10 führen. Als sinnvollste Lösung bietet sich deshalb die Verwendung des ersten Grenzwerts Σ1 als Startwert an.

Hiermit wird also bei Inbetriebnahme der Vorrichtung 10 einmalig die Zuordnung durchgeführt. Inbetriebnahme bedeutet z.B., daß der Fahrer den Zündkontakt des Kraftfahrzeugs geschlossen hat und daraufhin das Bedienelement 36 erstmalig betätigt. Weitere Zuordnungen sind während der Fahrt nicht mehr notwendig, da Alterungserscheinungen des Feuchtigkeitssensors 22 in dieser kurzen Zeitspanne nicht vorkommen. Sollte jedoch bei einer späteren Wiederinbetriebnahme der Vorrichtung 10 bzw. zu einem späteren Zeitpunkt des Wischbetriebs ein höherer als der bisher ermittelte höchste Meßwert Us ermittelt werden, d.h. ein saubererer oder trockenerer Zustand der Scheibe oder eine größere Signalverstärkung vorliegen, dann wird dieser dem ersten Grenzwert Σ1 nach dem oben beschriebenen Verfahren zugeordnet.

Bei zunehmendem Feuchtigkeitsbelag auf der Scheibe nehmen die Meßwerte Us des Feuchtigkeitssensors 22 und die Summe Σ im Speicher 28 ab. Fällt der Wert der Summe Σ unter die Schwelle S, so erkennt die dem Speicher 28 nachgeordnete Auswertestufe 30 dies als Regen und gibt ein Steuersignal 18 zum Wiedereinschalten des Motors 14 aus. Der Wischer 12 reinigt die Scheibe und überstreicht dabei den Feuchtigkeitssensor 22. Die Meßwerte Us nehmen daher wieder zu, so daß der Wert der Summe Σ die Schwelle S wieder überschreitet. Bei weiterhin andauerndem Niederschlag nehmen die Meßwerte Us wieder ab und bei Unterschreiten der Schwelle S wird wieder ein Wischbetrieb ausgeführt. In Abhängigkeit der Niederschlagsstärke wird z.B. ein Intervallwischbetrieb mit variabler Intervalldauer realisiert.

Vorzugsweise kann die Schwelle S auch variabel ausgeführt sein, so daß bei unterschiedlichen Wetterbedingungen die Empfindlichkeit des Feuchtigkeitssensors 22 regulierbar ist. So kann ebenfalls eine Tag/Nachterkennung zur Empfindlichkeitseinstellung herangezogen werden.

In den ersten Minuten nach Inbetriebnahme erhöht sich die Temperatur des Feuchtigkeitssensors 22 schnell und nimmt anschließend nur noch langsam zu. Der Temperaturanstieg führt bei einem konstanten Belag auf der Scheibe zu einer erst schnell dann langsam abfallenden Abschwächung der Meßwerte Us. In Figur 2 verschiebt sich dadurch die Kurve für die Meßwerte Us in Richtung des durchgezogenen Pfeiles T und die unveränderte Schwelle S in Figur 4 würde bereits früher, d.h. bei einem geringeren Belag, erreicht werden. Im Extremfall würde der Wischer 12 in Betrieb genommen werden, obwohl keine Feuchtigkeit auf der Scheibe vorhanden wäre.

Um diesen Temperatureffekt zu kompensieren, werden von der als Mittel zur Temperaturkompensation ausgebildeten Programmsteuerung 38 zusätzliche Korrekturinkremente auf die Summe Σ im Speicher 28 addiert. Da der Verlauf der Temperaturänderung an sich bekannt ist, kann die Programmsteuerung 38 entsprechend programmiert werden. Der Wert der Summe Σ wird um die jeweiligen Korrekturinkremente erhöht, um den die Meßwerte Us durch den Temperatureffekt abnehmen, so daß bei gleichbleibenden Belag auf der Scheibe die Summe Σ konstant bleibt. Beispielsweise wird zur Kompensation der Temperaturdrift zu Beginn der Einschaltphase ein Inkrement pro Sekunde und nach der Einschaltphase ein Inkrement pro fünf Minuten auf die Summe Σ addiert. Insgesamt werden etwa 80 Korrekturinkremente auf die Summe Σ addiert, um die temperaturbedingte Pegeländerung von etwa 30% zu korrigieren. Wenn sich der Feuchtigkeitssensor 22 nach etwa fünf bis zehn Minuten in einem thermischen Gleichgewicht befindet, werden keine weiteren diesbezüglichen Korrekturinkremente addiert.

Die Erwärmung der Umgebungstemperatur findet dahingehend Berücksichtigung, daß deren maximal mögliche Änderung erfahrungsgemäß bei ca. 20 Grad Celsius pro 5 Minuten liegt und nach der Einschaltphase pauschal korrigiert wird: Wenn z.B. der Wert der Summe Σ unterhalb des ersten Grenzwerts Σ1 liegt, wird ständig ein Inkrement pro sechs Sekunden auf die Summe Σ addiert.

Bei Abkühlung der Umgebungstemperatur steigen die Meßwerte Us (Signalverstärkung) und die Zuordnung der maximalen Meßwerte Us zu dem ersten Grenzwert Σ1 erfolgt nach dem eingangs beschriebenen Verfahren und muß nicht weiter berücksichtigt werden.

In einem alternativen Ausführungsbeispiel wird durch den Temperaturfühler 32 die Temperatur des Sensors 22 und/oder der Umgebung gemessen, so daß bei Erwärmung der Betriebs- oder Umgebungstemperatur der Einfluß der Temperatur auf die Meßwerte Us von der Auswertestufe 30 kompensiert wird.

In einem verbesserten Ausführungsbeispiel werden aus den Meßwerten Us zuerst Mittelwerte gebildet. Bei der Mittelwertbildung werden, über einen kurzen Zeitraum (hier 24 ms) oder einer vorgegebenen Anzahl (hier 4 Meßwerte), Meßwerte Us gemittelt. Dabei ist es gleichgültig, ob die Mittelwerte direkt mit Erfassen des ersten Meßwertes Us oder erst nach Erfassen der vorgegebenen Anzahl oder des Zeitraums gebildet werden. Diese werden dann anstelle der Meßwerte Us zur Berechnung der Differenzen, wie bei den Einzelwerten bereits oben ausgeführt, herangezogen. Die berechnete Differenz wird auf die Summe Σ im Speicher 28 vorzeichenbehaftet addiert. Die Auswertung der Summe Σ erfolgt durch die Auswertestufe 30. Dem ersten Grenzwert Σ1 wird der maximale Mittelwert zugeordnet. In den Figuren 3 und 4 wird anstelle der Meßwerte Us in Ink der Mittelwert in Ink eingetragen. Eine zusätzliche Analyse der Einzelmeßwerte Us in der Auswertestufe 30 erlaubt die Bestimmung einer Tendenz.

In einem weiteren Ausführungsbeispiel werden anstelle der berechneten Differenzen gewichtete Differenzen auf die Summe E im Speicher 28 addiert. Hierbei wird beispielsweise bei einer Differenz von 1 bis 5 Ink der gleiche Wert auf die Summe Σ addiert, jedoch bei Differenzen von 5 bis 10 Ink oder mehr jeweils nur ein anteiliger, geringerer Wert der Differenz. Dadurch bleibt die Feuchtigkeitserkennung bei geringer Feuchtigkeit empfindlich und wird bei großen Feuchtigkeitsänderungen unempfindlicher.

## Patentansprüche

1. Vorrichtung (10) zum Betreiben eines Scheibenwischers (12), vorzugsweise für eine Kraftfahrzeugscheibe, mit einem Wischermotor (14), einer Steuereinheit (16) mit Speicher (28) und einem Feuchtigkeitssensor (22) zum Erfassen des Benetzungszustandes einer Scheibe, dessen Messwerte (Us) sich bei zunehmenden Benetzungszustand ändern, vorzugsweise abnehmen, wobei die Steuereinheit (16) die Messwerte (Us) aufnimmt und auswertet und in Abhängigkeit dieser Messwerte (Us) beim Erreichen einer Schwelle (S) den Wischermotor (14) ansteuert, wobei die Steuereinheit (16) den Messwerten (Us) Inkrementalwerte (Ink) zuordnet, jeweils die Differenz zweier aufeinander folgender Inkrementalwerte (Ink) vorzeichenbehaftet in dem Speicher (28) zu einer Summe (Σ) aus vorher auf gleiche Weise gebildeten Differenzen auf addiert und wobei die Steuereinheit (16) bei Erreichen, vorzugsweise Unterschreiten, der Schwelle (S) durch die im Speicher (28) abgelegte Summe (Σ) einen Wischbetrieb auslöst, **dadurch gekennzeichnet, dass** die Steuereinheit (16) Mittel zur Temperaturkompensation aufweist, die die Summe (Σ) durch Korrekturinkremente korrigiert.

2. Vorrichtung (10) nach Anspruch 1, **dadurch gekennzeichnet, dass** die Steuereinheit (16) einen Mittelwert aus mindestens zwei Inkrementalwerten (Ink) aus aufeinander folgenden Messwerten (Us) bildet und jeweils die Differenz zweier aufeinander folgender Mittelwerte vorzeichenbehaftet in dem Speicher (28) zu der Summe (Σ) aus vorher auf gleiche Weise gebildeten Differenzen auf addiert.

3. Vorrichtung (10) nach Anspruch 1 oder 2, **dadurch gekennzeichnet, dass** in der Steuereinheit (16) ein beliebig vorgebbarer erster Grenzwert (Σ1) und im Abstand dazu ein zweiter Grenzwert (Σ2) der Summe (Σ) festgelegt sind, wobei der erste Grenzwert (Σ1) dem Messwert (Us) des Feuchtigkeitssensors (22) bei einer trockenen oder sauberen Scheibe zugeordnet ist.

4. Vorrichtung (10) nach Anspruch 3, **dadurch gekennzeichnet, dass** der erste Grenzwert (Σ1) als Startwert für die Summe (Σ) in den Speicher (28) einschreibbar ist.

5. Vorrichtung (10) nach Anspruch 3, **dadurch gekennzeichnet, dass** die Schwelle (S) im Bereich zwischen dem ersten und dem zweiten Grenzwert (Σ1, Σ2) liegt und vorzugsweise variabel ausgeführt ist.

6. Vorrichtung (10) nach Anspruch 1 oder 2, **dadurch gekennzeichnet, dass** eine Temperaturerfassung zur Temperaturkompensation durch einen Temperaturfühler (32) erfolgt.

7. Vorrichtung (10) nach Anspruch 1 oder 2, **dadurch gekennzeichnet, dass** die Steuereinheit (16) einen Inkrementalwertgeber (24), einen Differenzwertbildner (26), Mittel zur Temperaturkompensation (38) und eine Auswertestufe (30) enthält.

8. Verfahren zum Betreiben mindestens eines Scheibenwischers (12), vorzugsweise für eine Kraftfahrzeugscheibe, mit einem Wischermotor (14), einer Steuereinheit (16) mit Speicher (28) und einem Feuchtigkeitssensor (22) zum Erfassen des Benetzungszustandes einer Scheibe, dessen Messwerte (Us) sich bei zunehmenden Benetzungszustand ändern, vorzugsweise abnehmen, wobei die Messwerte (Us) von der Steuereinheit (16) aufgenommen und ausgewertet werden und in Abhängigkeit dieser Messwerte (Us) beim Erreichen einer Schwelle (S) der Wischermotor (14) von der Steuereinheit (16) angesteuert wird, wobei durch die Steuereinheit (16) den Messwerten (Us) Inkrementalwerte (Ink) zugeordnet werden und jeweils die Differenz der aufeinander folgenden Inkrementalwerte (Ink) vorzeichenbehaftet in dem Speicher (28) zu einer Summe (Σ) aus vorher auf gleiche Weise gebildeten Differenzen aufaddiert wird und bei Erreichen, vorzugsweise Unterschreiten, der Schwelle (S) durch die im Speicher (28) abgelegte Summe (Σ) von der Steuereinheit (16) ein Wischbetrieb ausgelöst wird, **dadurch** gekennzerichnet, dass die Summe (Σ) durch die Steuereinrichtung (16) bei sich ändernder, insbesondere steigender, Temperatur des Feuchtigkeitssensors (22) mit Korrekturinkrementen korrigiert, insbesondere aufaddiert, wird.

9. Verfahren nach Anspruch 8, **dadurch gekennzeichnet, dass** ein Mittelwert aus mindestens zwei Inkrementalwerten (Ink) aus aufeinander folgenden Messwerten (Us) gebildet wird und jeweils die Differenz der aufeinander folgenden Mittelwerte vorzeichenbehaftet zu der Summe (Σ) aus vorher auf gleiche Weise gebildeten Differenzen aufaddiert wird.

10. Verfahren nach Anspruch 8 oder 9, **dadurch gekennzeichnet, dass** in der Steuereinheit (16) ein beliebig vorgebbarer erster Grenzwert (Σ1) als Startwert für die Summe (Σ) in den Speicher (28) geschrieben wird.

11. Verfahren nach Anspruch 8 oder 9, **dadurch gekennzeichnet, dass** in der Steuereinheit (16) ein beliebig vorgebbarer zweiter Grenzwert (Σ2) der Summe (Σ) festgelegt ist, wobei bei Erreichen des zweiten Grenzwerts (Σ2) und weiter zunehmender Feuchtigkeit die Summe (Σ) auf den Wert des zweiten Grenzwerts (Σ2) festgelegt wird.

## Claims

1. Device (10) for operating a windscreen wiper (12), preferably for a motor vehicle window, having a wiper motor (14), a control unit (16) with a memory (28) and a moisture sensor (22) for detecting the state of wetting of a window, the measured values (Us) of which moisture sensor change, preferably decrease, with an increasing state of wetting, the control unit (16) picking up the measured values (Us) and evaluating them and, as a function of these measured values (Us), activating the wiper motor (14) when a threshold (S) is reached, the control unit (16) assigning incremental values (Ink) to the measured values (Us), in each case adding the difference of two successive incremental values (Ink) in a signed manner in the memory (28) to a sum (Σ) of differences formed previously in the same manner and, when the sum (Σ) stored in the memory (28) reaches, preferably falls short of, the threshold (S), the control unit (16) triggering a wiping operation, **characterized in that** the control unit (16) has means for temperature compensation correcting the sum (Σ) by correction increments.

2. Device (10) according to Claim 1, **characterized in that** the control unit (16) forms an average value of at least two incremental values (Ink) from successive measured values (Us) and in each case adds the difference of two successive average values in a signed manner in the memory (28) to the sum (Σ) of differences formed previously in the same manner.

3. Device (10) according to Claim 1 or 2, **characterized in that** a first limit value (Σ1) which can be specified as desired and, at a distance therefrom, a second limit value (Σ2) of the sum (E) are defined in the control unit (16), the first limit value (Σ1) being assigned to the measured value (Us) of the moisture sensor (22) when a window is dry or clean.

4. Device (10) according to Claim 3, **characterized in that** the first limit value (Σ1) can be written into the memory (28) as a starting value for the sum (Σ).

5. Device (10) according to Claim 3, **characterized in that** the threshold (S) lies in the region between the first and the second limit value (Σ1, Σ2) and is preferably designed such that it can vary.

6. Device (10) according to Claim 1 or 2, **characterized in that** a detecting of temperature for temperature compensation is undertaken by a temperature sensor (32).

7. Device (10) according to Claim 1 or 2, **characterized in that** the control unit (16) contains an incremental encoder (24), a differential value former (26), means for temperature compensation (38) and an evaluation step (30).

8. Method for operating at least one windscreen wiper (12), preferably for a motor vehicle window, having a wiper motor (14), a control unit (16) with a memory (28) and a moisture sensor (22) for detecting the state of wetting of a window, the measured values (Us) of which moisture sensor change, preferably decrease, with an increasing state of wetting, the measured values (Us) being picked up by the control unit (16) and evaluated and, as a function of these measured values (Us), the wiper motor (14) being activated by the control unit (16) when a threshold (S) is reached, incremental values (Ink) being assigned to the measured values (Us) by the control unit (16), and in each case the difference of the successive incremental values (Ink) being added in a signed manner in the memory (28) to a sum (Σ) of differences formed previously in the same manner, and when the sum (Σ) stored in the memory (28) reaches, preferably falls short of, the threshold (S), a wiping operation being triggered by the control unit (16), **characterized in that** the sum (Σ) is corrected, in particular added to, by the control device (16) in correction increments as the temperature of the moisture sensor (22) changes, in particular rises.

9. Method according to Claim 8, **characterized in that** an average value of at least two incremental values (Ink) is formed from successive measured values (Us) and in each case the difference of the successive average values is added in a signed manner to the sum (Σ) of differences formed previously in the same manner.

10. Method according to Claim 8 or 9, **characterized in that** a first limit value (Σ1) which can be specified as desired is written into the memory (28) in the control unit (16) as a starting value for the sum (Σ).

11. Method according to Claim 8 or 9, **characterized in that** a second limit value (Σ2), which can be specified as desired, of the sum (Σ) is defined in the control unit (16), with the sum (Σ) being defined to the value of the second limit value (Σ2) when the second limit value (Σ2) is reached and moisture continues to increase.

## Revendications

1. Dispositif (10) de commande d'un essuie-glace (12), de préférence d'une vitre de véhicule automobile, comprenant un moteur d'essuie-glace (14), une unité de commande (16) avec mémoire (28) et un capteur d'humidité (22) pour détecter l'état mouillé d'une vitre dont les valeurs mesurées (Us) varient, et de préférence baissent, avec la progression de l'état mouillé, dans lequel l'unité de commande (16) enregistre et exploite les valeurs mesurées (Us) et commande le moteur d'essuie-glace (14) en fonction de ces valeurs mesurées (Us) lorsqu'un seuil (S) est atteint, l'unité de commande (16), associant aux valeurs mesurées (Us) des valeurs incrémentales (Ink), additionne à chaque fois dans la mémoire (28) la différence de deux valeurs incrémentales (Ink) successives avec un signe à une somme (Σ) de différences préalablement formées de la même façon, et
lorsqu'un seuil (S) est atteint, de préférence n'est pas atteint, l'unité de commande (16) déclenche un essuyage à l'aide de la somme (Σ) stockée dans la mémoire (28),
**caractérisé en ce que**
l'unité de commande (16) présente des moyens de compensation de température qui corrigent la somme (Σ) par des incréments de correction.

2. Dispositif (10) selon la revendication 1,
**caractérisé en ce que**
l'unité de commande (16) forme une valeur moyenne à partir d'au moins deux valeurs incrémentales (Ink) de valeurs mesurées (Us) successives, et additionne à chaque fois dans la mémoire (28) la différence de deux valeurs moyennes successives avec un signe à la somme (Σ) de différences préalablement formées de la même façon.

3. Dispositif (10) selon la revendication 1 ou 2,
**caractérisé en ce que**
dans l'unité de commande (16), une première valeur seuil (Σ1) quelconque et à distance de celle-ci une deuxième valeur seuil (Σ2) de la somme (Σ) sont fixées, la première valeur seuil (Σ1) étant associée à la valeur mesurée (Us) du capteur d'humidité (22) lorsqu'une vitre est sèche ou propre.

4. Dispositif (10) selon la revendication 3,
**caractérisé en ce que**
la première valeur seuil (Σ1) peut être écrite dans la mémoire (28) comme valeur de démarrage pour la somme (Σ).

5. Dispositif (10) selon la revendication 3,
**caractérisé en ce que**
le seuil (S) se situe dans la plage comprise entre les première et deuxième valeurs seuils (Σ1, Σ2) et est de préférence variable.

6. Dispositif (10) selon la revendication 1 ou 2,
**caractérisé en ce que**
la détection d'une température pour la compensation de température est effectuée par un capteur de température (32).

7. Dispositif (10) selon la revendication 1 ou 2,
**caractérisé en ce que**
l'unité de commande (16) comprend un générateur de valeurs incrémentales (24), un formateur de valeurs de différence (26), des moyens de compensation de température (38) et un étage d'exploitation (30).

8. Procédé pour faire fonctionner au moins un essuie-glace (12), de préférence d'une vitre de véhicule automobile, comprenant un moteur d'essuie-glace (14), une unité de commande (16) avec mémoire (28) et un capteur d'humidité (22) pour détecter l'état mouillé d'une vitre dont les valeurs mesurées (Us) varient, de préférence baissent, avec la progression de l'état mouillé, selon lequel les valeurs mesurées (Us) sont enregistrées et exploitées par l'unité de commande (16) et le moteur d'essuie-glace (14) est commandé par celle-ci en fonction de ces valeurs mesurées (Us) lorsqu'un seuil (S) est atteint, des valeurs incrémentales (Ink) étant associées par l'intermédiaire de l'unité de commande (16) aux valeurs mesurées (Us) et à chaque fois la différence des valeurs incrémentales (Ink) successives avec un signe est additionnée à une somme (Σ) de différences préalablement formées de la même façon, et lorsqu'un seuil (S) est atteint, de préférence n'est pas atteint, un essuyage est déclenché par l'unité de commande (16) à l'aide de la somme (Σ) stockée dans la mémoire (28),
**caractérisé en ce que**
la somme (Σ) est corrigée à l'aide d'incréments de correction, notamment additionnée, par l'unité de commande (16) en présence d'une température variable, en particulier montante, du capteur d'humidité (22).

9. Procédé selon la revendication 8.
**caractérisé en ce qu'**
une valeur moyenne est formée à partir d'au moins deux valeurs incrémentales (Ink) de valeurs mesurées (Us) successives, et à chaque fois la différence des valeurs moyennes successives avec un signe est additionnée à la somme (Σ) de différences préalablement formées de la même façon.

10. Procédé selon la revendication 8 ou 9,
**caractérisé en ce que**
dans l'unité de commande (16), une première valeur seuil (Σ1) quelconque est écrite dans la mémoire (28) comme valeur de démarrage pour la somme (Σ).

11. Procédé selon la revendication 8 ou 9,
**caractérisé en ce que**
dans l'unité de commande (16), une deuxième valeur seuil (Σ2) quelconque de la somme (Σ) est fixée, la somme (Σ) étant fixée à la valeur de la deuxième valeur seuil (Σ2) lorsque celle-ci est atteinte et que l'humidité augmente encore.
